# EUROPÄISCHE PATENTANMELDUNG

(11) **EP 2 060 984 A1**
(43) Veröffentlichungstag der Anmeldung: **20.05.2009**
(21) Anmeldenummer: 08075883.2
(22) Anmeldetag: 14.11.2008
(51) Int. Cl.: G06F 17/30

(54) **Verfahren und System zur Informationssuche**

(30) Priorität: 19.11.2007 DE 102007056140
(71) Anmelder: Deutsche Telekom AG, 53113 Bonn (DE)
(72) Erfinder: Runge, Fred, 15838 Wünsdorf (DE); Müller, Christel, 15732 Schulzendorf (DE); Liu, Jin, 12357 Berlin (DE)
(74) Vertreter: Drosch, Ulrich

(57) **Zusammenfassung**

Die Erfindung betrifft ein Verfahren zur Informationssuche, mittels welchem Informationen in einem vorgegebenen Suchraum, wie beispielsweise dem Internet, auf intelligente Weise gesucht und an einem dafür vorgesehenen Endgerät präsentiert werden können.

Nach dem vorgeschlagenen Verfahren erfolgen sowohl die Suchanfragen als auch die Präsentation der zu den Suchanfragen ermittelten Suchergebnisse unter Verwendung der Medien Text, akustische Sprache und/oder unbewegtes oder bewegtes Bild.

Erfindungsgemäß wird die Suchanfrage von einer sie entgegennehmenden Dialogeinrichtung sowohl in der Form des ursprünglich durch den Nutzer verwendeten Mediums, als auch in der Form zumindest eines möglichen anderen der genannten Medien an die Sucheinrichtung übergeben. Ferner werden die zu der Suchanfrage ermittelten Ergebnisse durch die Dialogeinrichtung sowohl in der Form des Mediums, in welchem sie in dem Suchraum jeweils vorliegen, als auch in der Form zumindest eines möglichen anderen der genannten Medien präsentiert. Die Dialogeinrichtung fungiert als Schnittstelle zwischen dem Endgerät des Nutzers und der Sucheinrichtung.

## Beschreibung

Die Erfindung betrifft ein Verfahren zur Informationssuche, mittels welchem Informationen in einem vorgegebenen Suchraum, wie beispielsweise dem Internet, auf intelligente Weise gesucht und an einem dafür vorgesehenen Endgerät präsentiert werden können. Sie bezieht sich ferner auf ein System zur Durchführung dieses Verfahrens.

Für die Suche nach Informationen im Internet mit seinem unüberschaubaren Informationsangebot sind Suchmaschinen beziehungsweise Metasuchmaschinen ein unentbehrliches Hilfsmittel geworden. Bei der Nutzung derartiger Suchmaschinen erfolgt die Suche in der Regel textbasiert durch die Eingabe von Suchbegriffen oder Suchphrasen in eine Maske der jeweiligen Suchmaschine mittels der Tastatur eines für die Suche verwendeten Endgeräts, beispielsweise eines PCs. Zwar ist es den Nutzern von Computern und modernen Kommunikationsgeräten inzwischen durchaus vertraut, Informationen mittels einer textbasierten Eingabe zu suchen, jedoch stellt andererseits die Sprache für den Menschen die natürlichste Art der Kommunikation dar. Aus diesem Grunde wurde in der Vergangenheit bereits eine Vielzahl von Lösungen entwickelt, welche den Menschen eine sprachliche Interaktion beziehungsweise einen sprachlichen Dialog auch mit technischen Systemen, wie beispielsweise Computern, Automaten oder dergleichen, ermöglichen.

Entsprechend sind bereits auch Lösungen bekannt geworden, welche eine sprachgesteuerte Informationssuche ermöglichen. Derartige Lösungen werden beispielsweise in der US 7,027,987 B1 und der US 6,856,957 B1 beschrieben. Die genannten Druckschriften beziehen sich auf Sprachschnittstellen für Suchmaschinen. Gemäß den dazu beschriebenen Lösungen werden Spracheingaben mittels der entsprechenden Schnittstellen in textuelle Suchbegriffe gewandelt beziehungsweise auf der Basis von Spracheingaben textuelle Suchbegriffe oder Suchphrasen generiert. Zur Ableitung der textuellen Suchbegriffe aus den Spracheingaben bedienen sich die in den Druckschriften beschriebenen Lösungen bekannter Verfahren der Spracherkennung und Sprachanalyse.

Ferner ist aus der DE 69 932 44 T2 ein Verfahren bekannt, mittels welchem die Themenbezogenheit von Dokumenten bestimmt werden kann. Dies eröffnet die Möglichkeit, die Dokumente in einem Suchraum jeweils einem oder mehreren Themen zuzuordnen, für welches beziehungsweise welche sie aufgrund ihres Kontextes relevant sind. Dabei wird ausgehend von der Bestimmung des Verhältnisses der Perplexitäten eines jeweiligen Dokuments in Bezug auf ein allgemeines Sprachmodell und ein themenbezogenes Sprachmodel für das jeweilige Thema ein Relevanzwert ermittelt. Sofern dieser Relevanzwert, also das Verhältnis der Perplexitäten, ein vorgegebenes Relevanzmaß (Schwellwert) überschreitet, wird das Dokument dem betreffenden Thema zugeordnet.

In Weiterentwicklung des zuvor beschriebenen Ansatzes werden in der WO 99/05621 A1 und der WO 99/05618 A1 Lösungen beschrieben, bei denen diese themenbezogene Zuordnung von Dokumenten auf der Basis von Sprachmodellen erfolgt. Ferner beschreibt die EP 1 012 736 B1 eine Lösung, gemäß welcher Sprachmodelle angewandt werden, um bestimmte Themengebiete in Texten zu identifizieren.

Allen zuvor beschriebenen Verfahren ist jedoch gemeinsam, dass sie jeweils ausschließlich einen Eingabemodus, nämlich entweder ausschließlich die textuelle Form oder ausschließlich die Spracheingabe, unterstützen. Die mit ihrer Hilfe ermöglichte Informationssuche bezieht sich zudem im Allgemeinen ausschließlich auf einen Suchraum mit textuellen Informationen. Nur ausnahmsweise ist bei einigen Suchmaschinen durch die textuelle Eingabe auch die Suche nach Bild- oder Audiodokumenten möglich. In jedem Falle beschränkt sich aber gegenwärtig die Gestaltung der Präsentation entsprechender Suchergebnisse auf die Wiedergabe in dem für das jeweilige Dokument vorgefundenen Repräsentationsformat. Das heißt, Texte werden als Text, unbewegte oder bewegte Bilder ausschließlich visuell und Musik oder Sprache ausschließlich akustisch wiedergegeben. Jedoch entspricht es dem Naturell des Menschen, Informationen komplex zu nutzen und dabei wahlweise auf unterschiedliche Kommunikationswege und Medien, gegebenenfalls auch gleichzeitig, zurückzugreifen. Auf der anderen Seite gibt es Menschen mit körperlichen Einschränkungen, die aufgrund der Beschränkung bekannter Suchsysteme beziehungsweise -einrichtungen auf einen Eingabemodus oder eine Präsentationsform unter Umständen nicht alle im Internet verfügbaren Informationen für sich nutzen können.

Aufgabe der Erfindung ist es daher, ein Verfahren bereitzustellen, welches den Möglichkeiten der menschlichen Interaktion bei der Informationssuche besser gerecht wird. Das entsprechende Verfahren soll sowohl eine mehrkanalige Suche als auch eine mehrkanalige Ausgabe von Suchergebnissen ermöglichen. Weiterhin besteht die Aufgabe darin, ein zur Durchführung des Verfahrens geeignetes System bereitzustellen.

Die Aufgabe wird durch ein Verfahren mit den Merkmalen des Hauptanspruchs gelöst. Ein die Aufgabe lösendes und zur Durchführung des erfindungsgemäßen Verfahrens geeignetes System ist durch den ersten Sachanspruch charakterisiert. Vorteilhafte Aus- bzw. Weiterbildungen der Erfindung sind durch die jeweiligen Unteransprüche gegeben.

Nach dem vorgeschlagenen Verfahren zur Suche digitalisierter Informationen in einem Suchraum, wie dem Internet, erfolgen sowohl Suchanfragen als auch die Präsentation der zu den Suchanfragen ermittelten Suchergebnisse unter Verwendung der Medien Text, akustische Sprache und/oder unbewegtes oder bewegtes Bild. Dabei werden die Suchanfragen von einem Nutzer mittels eines dazu geeigneten Endgerätes an eine Sucheinrichtung gerichtet und die von dieser Sucheinrichtung, bei welcher es sich um ein hard- und softwarebasiertes System handelt, zurückgegebenen Suchergebnisse auf einem dazu entsprechend ausgebildeten Endgerät des Nutzers präsentiert.

Erfindungsgemäß wird eine unter Verwendung eines der vorgenannten Medien (Text, akustische Sprache, Bild) durch den Nutzer an die Sucheinrichtung gerichtete Suchanfrage von einer dazu ausgebildeten, die Suchanfrage entgegennehmenden Dialogeinrichtung sowohl in der Form des ursprünglich durch den Nutzer verwendeten Mediums, als auch in der Form zumindest eines möglichen anderen der genannten Medien an die Sucheinrichtung übergeben.

Ferner werden die von der Sucheinrichtung zu der betreffenden Suchanfrage ermittelten Ergebnisse durch die bereits angesprochene Dialogeinrichtung sowohl in der Form des Mediums, in welchem sie in dem Suchraum jeweils vorliegen, als auch in der Form zumindest eines möglichen anderen der bereits mehrfach genannten Medien präsentiert. Erfindungsgemäß werden dabei die Überprüfung auf die Möglichkeiten einer Wandlung einer jeweiligen Suchanfrage und eines jeweiligen Suchergebnisses sowie deren, im Falle des Bestehens einer solchen Möglichkeit, erfolgende Wandlung in die Form eines jeweils anderen Mediums durch die als ein hard- und/oder softwarebasiertes Subsystem ausgebildete Dialogeinrichtung durchgeführt. Die Dialogeinrichtung fungiert insoweit als Schnittstelle zwischen dem jeweiligen Endgerät des Nutzers und der Sucheinrichtung.

Entsprechend einer möglichen Gestaltung des erfindungsgemäßen Verfahrens werden Suchanfragen und/oder Suchergebnisse in textueller Form mittels einer Sprachsyntheseeinheit der Dialogeinrichtung in akustische Sprache gewandelt. Ferner ist es vorgesehen, Suchanfragen und/oder Suchergebnisse in Form akustischer Sprache mittels einer Sprachanalyseeinheit der Dialogeinrichtung in eine textuelle Form zu wandeln.

Besonderheiten ergeben sich bei Suchanfragen und/oder Suchergebnissen, welche ursprünglich in bildlicher Form (unbewegtes Bild oder bewegtes Bild in Form einer Videosequenz) vorliegen. Dabei ist es gemäß der Erfindung vorgesehen, Suchanfragen in bildlicher Form durch eine OCR-Analyse von ihnen gegebenenfalls wiedergegebener Textbestandteile in eine textuelle Suchanfrage zu wandeln. Suchergebnisse in bildlicher Form werden gemäß einer vorgesehenen Ausgestaltung der Erfindung ebenfalls durch eine OCR-Analyse von ihnen gegebenenfalls wiedergegebener Textbestandteile und/oder durch eine Analyse gegebenenfalls zu ihnen im Suchraum vermerkter textlicher oder akustischer Annotationen in ein textuelles und/oder ein akustisch-sprachliches Suchergebnis gewandelt.

Hierbei liegt es auf der Hand, dass in dem Falle, dass bildliche Suchanfragen oder bildliche Suchergebnisse, welche Bildbestandteile enthalten, die keinen Text wiedergeben und/oder in dem Fall, dass zu einem bildlichen Suchergebnis in dem Suchraum keine Annotation vermerkt ist, in der Regel keine Wandlung der bildlichen Suchanfrage beziehungsweise des bildlichen Suchergebnisses in eine andere Form erfolgen kann. Dies wird im Hauptanspruch dadurch zum Ausdruck gebracht, dass nach dessen Merkmalen sowohl eine Wandlung von Suchanfragen, als auch eine Wandlung von Suchergebnissen in die Form zumindest eines möglichen anderen Mediums erfolgt. Die Erfindung geht demnach davon aus, sowohl Suchanfragen als auch Suchergebnisse jeweils in mindestens eine, vorzugsweise in möglichst mehrere andere Formen zu wandeln, wobei aber hierfür im Einzelfalle technische Grenzen gesetzt sein können, etwa dann, wenn, wie bereits ausgeführt, Bilder keine Textbestandteile wiedergeben und auch nicht mit einer textlichen oder akustischen Annotation versehen sind. Gleichwohl ist es der Grundgedanke der Erfindung, für die Suche und die Präsentation der Ergebnisse möglichst mehrere den Menschen zur Verfügung stehende Kommunikationsmedien zu verwenden, wobei das dazu vorgeschlagene Verfahren auch eine Überprüfung auf das Bestehen der Möglichkeit ihrer jeweiligen Verwendung (durch Wandlung aus einem anderen Kommunikationsmedium) umfasst. Eine solche allumfassende Nutzung menschlicher Kommunikationsmedien für die Suche nach digitalisierten Informationen ist aus dem Stand der Technik bisher nicht bekannt.

Eine vorteilhafte Weiterbeildung des erfindungsgemäßen Verfahrens ist dadurch gegeben, dass für die Wandlung einer Suchanfrage Suchergebnisse herangezogen werden, welche durch eine erste, ausschließlich auf der Grundlage des für die Suchanfrage ursprünglich verwendeten Mediums durchgeführten Suche ermittelt werden. Mit besonderem Vorteil kann hierdurch insbesondere die Wandlung bildlicher Suchanfragen in textuelle und/oder akustisch sprachliche Suchanfragen erreicht werden. Danach werden bildliche Suchanfragen zunächst für die Durchführung einer rein bildlichen Suche verwendet und dabei ermittelte erste Suchergebnisse durch eine OCR-Analyse von gegebenenfalls durch die ermittelten Bilder wiedergegebenen Textbestandteilen oder durch eine Analyse im Suchraum gegebenenfalls zu diesen Bildern vermerkter textlicher oder akustischer Annotationen in eine textuelle und/oder akustische Suchanfrage gewandelt und die Suche auf der Grundlage dieser zusätzlich generierten Suchanfrage oder Suchanfragen fortgeführt.

Die Übergabe zur Suche verwendeter Bilder kann beispielsweise durch die Übergabe einer Bilddatei an die Sucheinrichtung oder durch die Übergabe einer mittels der Mouse oder eines Griffels an einem entsprechend ausgebildeten Eingabegerät erzeugten Skizze erfolgen. Sofern für die Suchanfrage verwendete Bilder oder Skizzen beziehungsweise im Ergebnis der Suche ermittelte Bilder oder Skizzen mittels OCR-Analyse analysierbare Textbestandteile oder entsprechende Annotationen enthalten, ist es im Sinne der Erfindung, wenn die entsprechenden Suchanfragen oder Suchergebnisse in eine textuelle oder alternativ in eine akustisch sprachliche oder aber auch sowohl in eine textuelle, als auch in eine akustisch sprachliche Form gewandelt werden.

Das erfindungsgemäße Verfahren kann ferner dadurch vorteilhaft weitergebildet sein, dass die Suchanfrage und/oder die Suchergebnisse in textueller und/oder akustisch sprachlicher Form durch die Dialogeinrichtung in eine andere Sprache übersetzt werden.

Das beschriebene Verfahren zur Erweiterung der Suchanfragen auf weitere Medien, welches die Implementierung mindestens eines Konvertierungssystems zur Grundlage hat, generiert unter Umständen eine Vielzahl von Ergebnissen, die je nach Nutzerintention von unterschiedlichem Interesse sind. Deshalb kann es sinnvoll sein, je nach abgespeichertem Nutzer- oder Nutzerklassenmodell, dem ein Nutzer zugeordnet werden kann, sowohl eine unterschiedliche Wichtung der Suchergebnisse vorzunehmen, als auch bestimmte Konvertierungsmöglichkeiten einzuschränken.

In Abhängigkeit von der Zuordnung eines identifizierten und gegebenenfalls verifizierten Nutzers zu einer bestimmten Nutzerklasse, die aufgrund einer Sprecherklassifizierung oder unter Auswertung der erfassten Endgerätekennung (wie zum Beispiel HLR, CLI, ANI, IMEI, SIM-Kennung, IP-Adresse) vorgenommen werden kann, kann sowohl die Konvertierung der Suchanfrage in bestimmte Medien oder die Ausgabe durch die Sucheinrichtung gefundener Informationen eingeschränkt werden. Die entsprechenden Regeln, in denen Vorzugs- beziehungsweise gesperrte Konvertierungen und/oder Regeln zur Einschränkung der Ausgaben enthalten sind, sind in der Dialogeinrichtung oder in mindestens einer ihr zugeordneten Konvertierungseinheit abgelegt. Beispielsweise können hier Regeln hinterlegt sein, die bei Zuordnung eines Nutzers zu mindestens einer Klasse eine maximale Länge der Ergebnisliste festlegen, bei deren Überschreiten zum Beispiel bestimmte Medien zur zusätzlichen Generierung von Suchanfragen gesperrt werden. Dabei kann die Suche entweder in einem iterativen Prozess über die verbleibenden Medien wiederholt oder die Ausgabe der Ergebnisse auf bestimmte Medien beschränkt werden. Ebenso, wie die Ausgabe von Ergebnissen eingeschränkt werden kann, ist es aber gegebenenfalls auch sinnvoll, die Wichtung und damit die Reihenfolge der Präsentation der Suchergebnisse nutzerklassenabhängig zu gestalten. In Bezug auf eine Nutzerklasse können zum Beispiel Regeln so gestaltet werden, dass Ausgaben mit bestimmten medialen Repräsentationen geringere oder höhere Wichtungskoeffizienten erhalten. Auch kann eine inhaltliche Analyse der Ergebnisse mit Zuordnung der Ergebnisse zu bestimmten Ergebnisklassen als Grundlage für die Zuordnung von Wichtungskoeffizienten in Abhängigkeit von Ergebnis- und/oder ermittelter Nutzerklasse dienen.

Ein zusätzlicher Weg zur Anpassung de Ergebnisausgabe an die Bedürfnisse des Nutzers besteht in der Einführung eines Ausgabekonvertierungssystems welches für verschiedenen Medien einzelne Suchergebnisse in Medien konvertiert, die im gegebenen Anwendungskontext durch den Nutzer vorgezogen werden.

Verwendet der Nutzer beispielsweise ein Endgerät, welches nur über einen kleinen Bildschirm mit einem Lautsprecher verfügt, so kann zum Beispiel festgelegt sein, dass textuelle Suchergebnisse durch den Einsatz von Technologien der Sprachsynthese (TTS = Text-To-Speech) vorzugsweise nur in Sprachausgaben konvertiert werden. Auch ist die Konvertierung von in Bildern vorhandenen textuellen Informationen über OCR in alphanumerische Zeichenfolgen, die dann zusammenfassend ausgegeben werden, oder deren zusätzliche Konvertierung in Sprachausgaben denkbar. Liegen die gefundenen Informationen im Audioformat vor, so kann durch den Einsatz der Spracherkennungstechnologie (ASR = Automatic Speech Recognition) gegebenenfalls zusätzlich eine Umwandlung in Text erfolgen, der auf dem Bildschirm des Endgerätes zusätzlich zur Audioausgabe ausgegeben wird. Gleiches gilt für die Umwandlung von Audioinhalten gefundener Videosequenzen.

Zur Verbesserung der Übersichtlichkeit gefundener textueller Informationen können diese in Zeichnungen in Form von Tabellen umgewandelt werden. Dies kann vorzugsweise zum Beispiel in den Fällen erfolgen, in denen die gefundenen textuellen Information in eher maschinenlesbaren Textformatierungen, wie zum Beispiel XML, RDF, OWL o. ä., vorliegen.

Die Bestimmung der Bedeutung von einzelnen Eingaben ist nur ein Teilaspekt der Interpretation von Sucheingaben. Nutzereingaben während eines Diskurses oder Dialoges mit einem System können nicht nur inhaltliche Informationen enthalten, die gemäß der definierten Bedeutung semantisch interpretiert werden können, sondern auch Informationen pragmatischer Art, zum Beispiel über die Eingabesituation, sowie über den Typ der Eingaben, wie zum Beispiel, ob der Nutzer eine Frage zur Klärung zu schon vorher erhaltenen Suchanfragen stellt oder einfach nur einen Ausgabeprompt beantwortet. Die Erfassung der Art der Eingabe kann zusätzlich durch automatische Auswertung des Diskurskontextes erfolgen.

Da nach einem erfolgreichen Dialogschritt in einem geführten Dialog bei Eingabe einer Information des Nutzers der Typ der Eingabe als bekannt vorausgesetzt werden kann, kann die aufgezeichnete und erfasste Eingabe neben bedeutungstragenden auch pragmatische Informationen enthalten, die den Typ der Eingabe widerspiegeln. Hierbei kann administrativ festgelegt werden, ob für einen bestimmten Eingabetyp einer Eingabe oder eines Teils einer Eingabe überhaupt inhaltliche Informationen möglich und/oder zuglassen sind, so dass im negativen Fall einzig die Ermittlung des Eingabetyps erfolgt. Durch Hinzufügen des ermittelten Eingabetyps liegen nach einer erfolgreichen Eingabe zusätzliche Informationen vor, die die Einbeziehung entsprechender Grammatiken oder Teilgrammatiken zur Bestimmung des Bedeutungsgehalts einer Eingabe beziehungsweise Suchanfrage begünstigen.

Werden Suchanfragen als Teil längerer Sitzungen eingegeben, an denen gegebenenfalls eine größere Gruppe von Nutzern beteiligt ist (zum Beispiel im Rahmen von Chats, Community-Diskussionen), so dient die Auswertung pragmatischer Informationen der Ausfilterung möglicher Suchanfragen gemäß dem Typ der Eingaben, als auch der Erfassung des Interaktionskontextes (Eingabesituation), welcher als zusätzliche Information bei konkret ausgefilterten Suchanfragen hinzugefügt werden kann. So kann nach bekannten Verfahren zum Beispiel die Ähnlichkeit der konkreten Suchanfrage zu vorher im Dialog zwischen den Nutzern erfassten Äußerungen festgestellt werden. Diese Äußerungen können ab einem festgelegten Ähnlichkeitsrang der Suchanfrage hinzugefügt werden.

So, wie Suchanfragen selbst im Rahmen des Eingabekontextes pragmatische Informationen enthalten können, so können auch im Suchraum Informationen, Daten und/oder Wissensrepräsentationen enthalten sein, die neben den auf den Kern der Suchanfrage zutreffenden Teilen ebenfalls allgemeine pragmatische Informationen darüber enthalten, wie oder in welchem Zusammenhang (Kontext) zum Beispiel diese Daten erfasst wurden. So kann zusätzlich die Repräsentation von Zusatzinformationen, die die Situationsbezogenheit der gesuchten Daten widerspiegeln, mit der erfassten Eingabesituation des Nutzers verglichen werden. Die Ergebnisse eines derartigen Vergleichs können zusätzlich der Berechnung von Wichtungen dienen, die Einfluss auf die Reihung der Ergebnisse haben.

Ein die Aufgabe lösendes und zur Durchführung des zuvor beschriebenen Verfahrens ausgebildetes System besteht zumindest aus einem digitalisierte Informationen enthaltenden Suchraum, einem Endgerät zur Generierung von Suchanfragen und einem Endgerät zur Präsentation von Suchergebnissen zu den Suchanfragen, einer als Subsystem ausgebildeten hard- und softwarebasierten Sucheinrichtung, mittels welcher gesuchte Informationen unter Verwendung entsprechender Suchanfragen aus dem Suchraum herausgefiltert werden und aus die vorgenannten Einheiten des Systems verbindenden Kommunikationskanälen. Die Übergabe von Suchanfragen an die Sucheinrichtung und die Präsentation der zu ihnen ermittelten Suchergebnisse erfolgt, dem Verfahren entsprechend, unter Verwendung der Medien Text, akustische Sprache und/oder unbewegtes oder bewegtes Bild. Vorzugsweise, jedoch nicht zwingend handelt es sich bei dem zur Generierung der Suchanfragen verwendeten Endgerät und dem der Präsentation der Suchergebnisse dienenden Endgerät um ein und dasselbe Endgerät.

Bei dem erfindungsgemäßen System ist zwischen dem zur Generierung der Suchanfragen sowie dem zur Präsentation der Suchergebnisse dienenden Endgerät und der Sucheinrichtung eine Dialogeinrichtung als Schnittstelle angeordnet. Durch diese Dialogeinrichtung werden die Suchanfragen sowohl in Form des ursprünglich für die Suchanfrage verwendeten Mediums, als auch in Form zumindest eines möglichen anderen der genannten Medien an die Sucheinrichtung übergeben. Ferner werden die durch die Sucheinrichtung zu den Suchanfragen ermittelten Suchergebnisse von der Dialogeinrichtung sowohl in Form des Mediums, in welchem sie in dem Suchraum jeweils vorliegen, als auch in Form zumindest eines möglichen anderen der genannten Medien zur Präsentation an das dafür vorgesehene Endgerät übergeben. Die Dialogeinrichtung des erfindungsgemäßen Systems umfasst dazu mindestens eine Konvertierungseinrichtung zur Konvertierung der Suchanfragen und

Suchergebnisse in ein jeweils anderes Medium oder steht mit mindestens einer solchen Konvertierungseinheit in einer derartigen Wirkverbindung, dass die Konvertierungseinheit oder die Konvertierungseinheiten zumindest als logischer Bestandteil der Dialogeinheit anzusehen sind. Bei dem schon mehrfach angesprochenen Suchraum handelt es sich vorzugsweise um das Internet. Als Suchraum können aber auch ein firmeninternes Intranet oder ein Speichermedium wie eine Festplatte oder ein Datenträger zur Verwendung in einem optischen Laufwerk dienen.

Entsprechend einer praxisgerechten Ausgestaltung der Erfindung umfasst die Dialogeinrichtung Einheiten zur Anschluss- und/oder Endgeräteerkennung, zur Texterfassung, zur Bilderfassung und zur Spracherfassung. Dabei sind die Teile der genannten Einheiten unmittelbarer Bestandteil der Dialogeinrichtung und/oder der mit der Dialogeinrichtung in Wirkverbindung stehenden Konvertierungseinheit oder Konvertierungseinheiten.

Die Einheit beziehungsweise die Einheiten zur Spracherfassung weisen vorzugsweise jeweils mindestens eine Komponente zur Sprachenerkennung, eine Komponente zur Sprechererkennung, eine Komponente zur Sprecherklassifizierung und eine Komponente zur Sprachanalyse auf. Ferner weisen die Einheit beziehungsweise die Einheiten zur Bilderkennung vorzugsweise jeweils mindestens eine Komponente zur Erfassung von mittels einer Eingabeeinheit, wie einer Mouse oder eines Griffels des Endgeräts, zur Generierung von Suchanfragen erstellten Zeichnungen oder Skizzen auf.

Die Konvertierungseinheit oder die Konvertierungseinheiten umfassen vorzugsweise Komponenten zur OCR-Analyse von unbewegten oder bewegten Bildern wiedergegebener Textbestandteile sowie Komponenten zur Sprachanalyse und zur Sprachsynthese.

Die Erfindung soll nachfolgend anhand eines Ausführungsbeispiels nochmals erläutert werden.

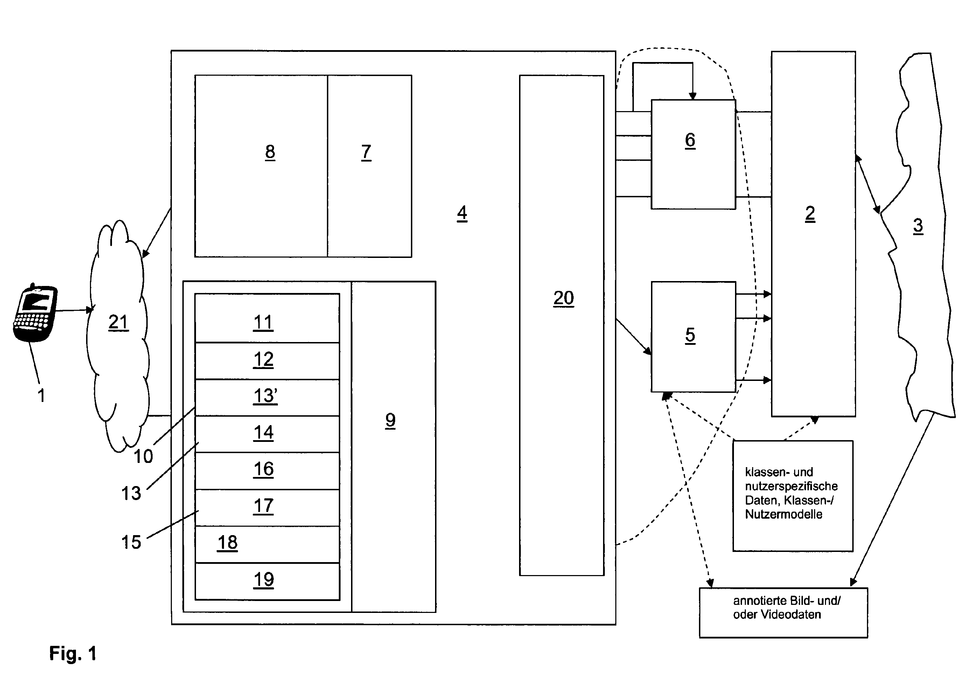

Die Fig. 1 zeigt die Struktur einer möglichen Ausbildungsform des erfindungsgemäßen Systems in einer schematischen Darstellung. Die Darstellung geht von der Annahme aus, dass ein digitalisierte Informationen enthaltender Suchraum 3, im Beispiel das Internet, durch einen (nicht dargestellten) Nutzer mittels eines mobilen, internetfähigen Gerätes 1, im Beispiel eines Smart-Phones, nach Informationen durchsucht wird. Dabei ist gemäß dem gezeigten Beispiel das zur Suche und zur Präsentation der Ergebnisse verwendete mobile Gerät 1 nicht direkt, sondern über ein lokales Netzwerk 21 mit dem Internet 3 verbunden. Dem Grundgedanken der Erfindung folgend, wird einer zur Suche verwendeten Sucheinrichtung 2, gegebenenfalls einem Verbund aus Suchmaschinen, eine entsprechende Suchanfrage des Nutzers über eine Dialogeinrichtung 4 zugeführt. Ebenso werden ermittelte Suchergebnisse dem Nutzer über Vermittlung durch die Dialogeinrichtung 4 an seinem Endgerät 1 präsentiert. Wesentlicher logischer Bestandteil der Dialogeinrichtung 4 sind Einheiten 5,6 zur Konvertierung der Suchanfragen und der Suchergebnisse. Die betreffenden Konvertierungseinheiten 5, 6 können dabei unmittelbarer integraler Bestandteil der Dialogeinrichtung 4 sein oder mit diesem in einer entsprechenden Wirkverbindung stehen. Eine von dem Nutzer ausgelöste Suchanfrage wird zunächst durch Einheiten 10 zur Eingabeerkennung der Dialogeinrichtung 4 entgegengenommen. Bei diesen Einheiten 10 zur Eingabeerkennung handelt es sich um mindestens eine Einheit 11 zur Anschluss- beziehungsweise Endgeräteerkennung, mindestens eine Einheit 12 zur Texterfassung, mindestens eine Einheit zur Bilderfassung 13 und mindestens eine Einheit zur Spracherfassung 15. Dabei umfasst die Einheit zur Bilderfassung 13 neben einer Komponente 13' zur Erfassung von Bildvorlagen auch eine Komponente 14 zur Erkennung von mittels Mouse oder Griffel erstellter Skizzen. Bestandteile der Einheit 15 zur Spracherfassung sind eine Sprechererkennung 16, eine Sprecherklassifizierung 17, eine Sprachenerkennung 18 und eine Komponente 19 zur Spracherkennung und -analyse. Die Teile beziehungsweise Bestandteile der vorgenannten Einheiten sind, wie bereits ausgeführt unmittelbarer Bestandteil der Dialogeinrichtung 4 und/oder der mit der Dialogeinrichtung 4 in Wirkverbindung stehenden Konvertierungseinheiten 5, 6. So können zum Beispiel Komponenten 19 zur Spracherkennung und -analyse, wie durch die gestrichelte Linie angedeutet physisch, das heißt im Hinblick auf die entsprechenden Hardwareeinheiten und die auf ihnen ablaufende Software, auch in den Konvertierungseinheiten 5, 6 angesiedelt sein.

Eine durch die Einheiten 10 zur Eingabeerkennung erfasste Suchanfrage wird durch eine diesen Einheiten nachgeschaltete Auswerteeinheit 9 einer ersten Auswertung und Interpretation unterzogen. Dabei wird die Suchanfrage in eine Zwischenpräsentation gewandelt, wobei beispielsweise eine als Freitext formulierte Suchanfrage in eine nur noch Verben und Substantive enthaltende textuelle Suchanfrage überführt wird und bedeutungslose Füllwörter entfernt werden. Die entsprechend vorverarbeitete Suchanfrage wird durch eine die Interaktion zwischen dem Nutzer und der Sucheinrichtung managende Einheit 20 (Interaktionsmanager) der Konvertierungseinheit 5 zugeführt. Hier wird zunächst geprüft, inwieweit eine Konvertierung der in einer medialen Form, beispielsweise in Textform, vorliegende Suchanfrage in eine andere mediale Form möglich ist. Im Falle einer textuellen Suchanfrage würde durch die Konvertierungseinheit 5 die Möglichkeit erkannt, diese textuelle Suchanfrage in eine akustisch sprachliche Suchanfrage zu wandeln. Gesteuert durch den Interaktionsmanager 20 wird schließlich die Suchanfrage in ihrer ursprünglichen Form (textuell) und in einer gewandelten Form (gemäß dem erläuterten Beispiel eine akustisch sprachliche Form) an die Sucheinrichtung 2 übergeben.

Die von der Sucheinrichtung 2 im Suchraum 3 übermittelten Suchergebnisse werden in analoger Weise von der Einheit zur Konvertierung 6 der Suchergebnisse nach Möglichkeit von der medialen Form, in welcher sie im Suchraum 3 ermittelt wurden, in eine andere mediale Form umgewandelt. So wird beispielsweise durch die Konvertierungseinheit 6 ein im Internet 3 ermitteltes akustisch sprachliches Suchergebnis in eine textuelle Form gewandelt. Unter Vermittlung des Interaktionsmanagers 20 werden schließlich dem Nutzer an seinem Endgerät 1 über Einheiten 7, 8 zur Ausgabeplanung und zur Informationsausgabe die Suchergebnisse sowohl in akustisch sprachlicher Form als auch in textueller Form präsentiert.

Die nachfolgend wiedergegebene Tabelle verdeutlicht in der Form einer Medienmatrix die für die Umwandlung von Suchanfragen und Suchergebnissen in jeweils andere mediale Formen gegebenen Möglichkeiten.

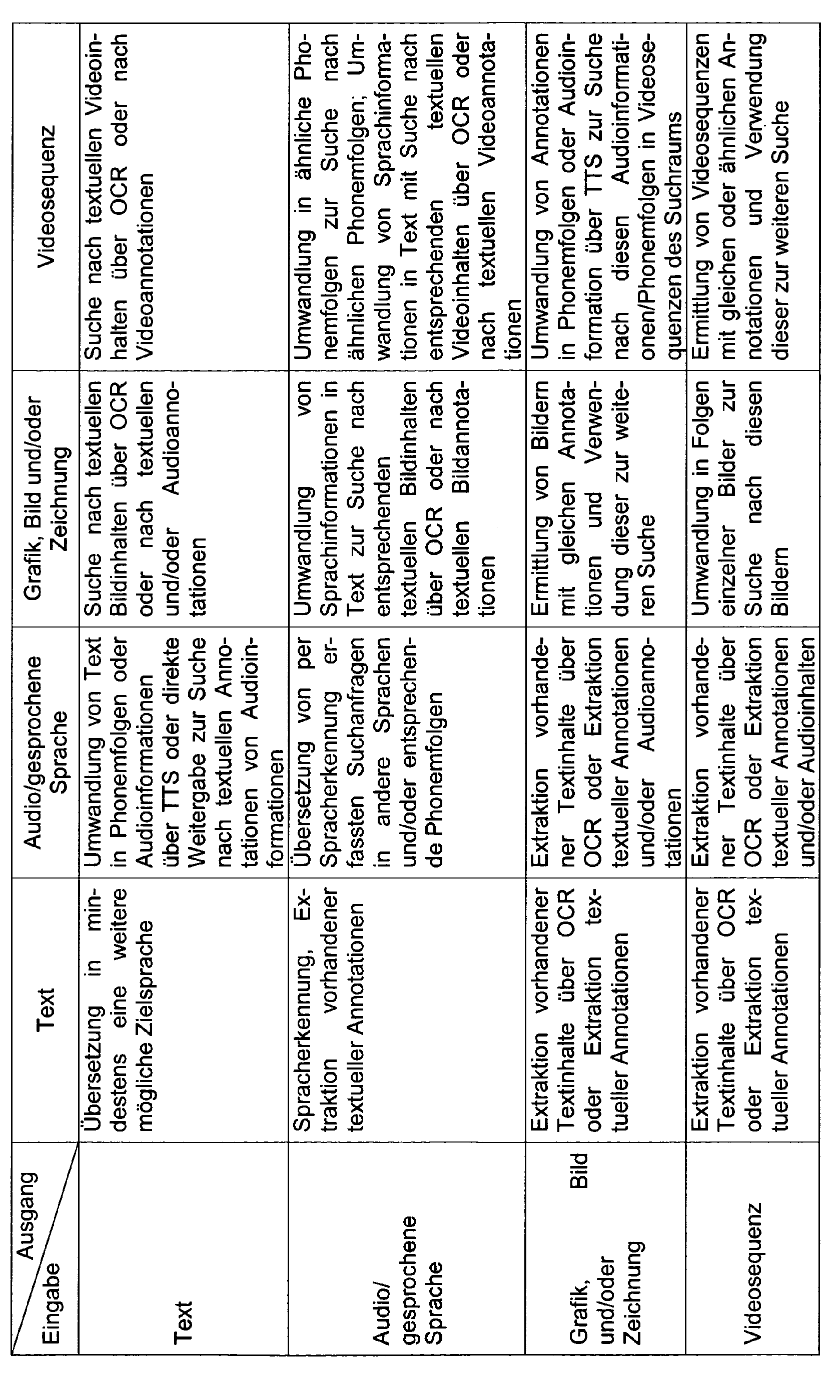

## Patentansprüche

1. Verfahren zur Suche digitalisierter Informationen in einem Suchraum (3), nach welchem unter Verwendung der Medien Text, akustische Sprache und/oder unbewegtes oder bewegtes Bild sowohl Suchanfragen von einem Nutzer mittels eines dazu geeigneten Endgerätes (1) an eine Sucheinrichtung (2) gerichtet, als auch deren Ergebnisse an einem dazu geeigneten Endgerät (1) des Nutzers präsentiert werden, **dadurch gekennzeichnet, dass** eine unter Verwendung eines der vorgenannten Medien durch den Nutzer an die Sucheinrichtung (2) gerichtete Suchanfrage von einer dazu ausgebildeten, die Suchanfrage entgegennehmenden Dialogeinrichtung (4) sowohl in Form des ursprünglich durch den Nutzer verwendeten Mediums, als auch in Form zumindest eines möglichen anderen der genannten Medien an die Sucheinrichtung (2) übergeben wird und die von der Sucheinrichtung (2) zu der betreffenden Suchanfrage in dem Suchraum (3) ermittelten Ergebnisse durch die Dialogeinrichtung (4) sowohl in Form des Mediums, in welchem sie in dem Suchraum (3) jeweils vorliegen, als auch in Form zumindest eines möglichen anderen der eingangs genannten Medien zur Präsentation an das dafür vorgesehene Endgerät (1) übergeben werden, wobei die Überprüfung auf die Möglichkeiten einer Wandlung einer jeweiligen Suchanfrage und eines jeweiligen Suchergebnisses und deren im Falle des Bestehens einer solchen Möglichkeit erfolgende Wandlung in die Form eines jeweils anderen Mediums durch die als Schnittstelle zwischen dem jeweiligen Endgerät (1) des Nutzers und der Sucheinrichtung (2) fungierende Dialogeinrichtung (4) durchgeführt wird.

2. Verfahren nach Anspruch 1, **dadurch gekennzeichnet, dass** die Suche digitalisierter Informationen im Suchraum (3) Internet erfolgt.

3. Verfahren nach Anspruch 1 oder 2, **dadurch gekennzeichnet, dass** Suchanfragen und/oder Suchergebnisse in textueller Form mittels einer Sprachsyntheseeinheit der Dialogeinrichtung in akustische Sprache gewandelt werden.

4. Verfahren nach Anspruch 1 oder 2, **dadurch gekennzeichnet, dass** Suchanfragen und/oder Suchergebnisse in Form akustischer Sprache mittels einer Sprachanalyseeinheit der Dialogeinrichtung in eine textuelle Form gewandelt werden.

5. Verfahren nach einem der Ansprüche 1 bis 4, **dadurch gekennzeichnet, dass** Suchanfragen in bildlicher Form durch eine OCR-Analyse von ihnen gegebenenfalls wiedergegebener Textbestandteile in eine textuelle Suchanfrage gewandelt werden.

6. Verfahren nach einem der Ansprüche 1 bis 5, **dadurch gekennzeichnet, dass** Suchergebnisse in bildlicher Form durch eine OCR-Analyse von ihnen gegebenenfalls wiedergegebener Textbestandteile und/oder durch eine Analyse einer gegebenenfalls zu ihnen im Suchraum (3) vermerkten textlichen oder akustischen Annotation in ein textuelles und/oder ein akustisch sprachliches Suchergebnis gewandelt werden.

7. Verfahren nach Anspruch 5 oder 6, **dadurch gekennzeichnet, dass** Suchanfragen in bildlicher Form unter Verwendung bei einer ersten rein bildlichen Suche ermittelter Bilder durch eine OCR-Analyse von gegebenenfalls durch diese ermittelten Bilder wiedergegebenen Textbestandteilen oder eine Analyse einer im Suchraum (3) gegebenenfalls zu diesen ermittelten Bildern vermerkten textlichen oder akustischen Annotation in eine textuelle und/oder akustisch sprachliche Suchanfrage gewandelt werden.

8. Verfahren nach einem der Ansprüche 1 bis 7, **dadurch gekennzeichnet, dass** Suchanfragen und/oder Suchergebnisse in textueller und/oder akustisch sprachlicher Form in eine andere Sprache übersetzt werden.

9. Verfahren nach einem der Ansprüche 1 bis 8, **dadurch gekennzeichnet, dass** je nach Nutzerklasse, welcher ein Nutzer zugeordnet wird, Konvertierungsmöglichkeiten eingeschränkt und/oder Suchergebnisse unterschiedlich gewichtet werden.

10. System zur Suche digitalisierter Informationen gemäß dem Verfahren nach Anspruch 1 oder 2, mit einem digitalisierte Informationen enthaltenden Suchraum (3), einem Endgerät (1) zur Generierung von Suchanfragen und zur Präsentation von Suchergebnissen zu den Suchanfragen, einer als Subsystem ausgebildeten hard- und softwarebasierten Sucheinrichtung (2), mittels welcher gesuchte Informationen unter Verwendung entsprechender Suchanfragen aus dem Suchraum (3) herausgefiltert werden und mit Kommunikationskanälen, welche die vorgenannten Einheiten des Systems miteinander verbinden, wobei sowohl die Übergabe von Suchanfragen an die Sucheinrichtung (2), als auch die Präsentation der zu ihnen ermittelten Suchergebnisse unter Verwendung der Medien Text, akustische Sprache und/oder unbewegtes oder bewegtes Bild erfolgt, **dadurch gekennzeichnet, dass** zwischen dem zur Generierung der Suchanfragen und zur Präsentation der Suchergebnisse dienenden Endgerät (1) und der Sucheinrichtung (2) eine Dialogeinrichtung (4) als Schnittstelle angeordnet ist, durch welche Suchanfragen sowohl in Form des ursprünglich für die Suchanfrage verwendeten Mediums, als auch in Form zumindest eines möglichen anderen der genannten Medien an die Sucheinrichtung (2) übergeben und von der Sucheinrichtung (2) übermittelte Suchergebnisse sowohl in Form des Mediums, in welchem sie in dem Suchraum (3) jeweils vorliegen, als auch in Form zumindest eines möglichen anderen der eingangs genannten Medien zur Präsentation an das dafür vorgesehene Endgerät (1) übergeben werden, wobei die Dialogeinrichtung (4) mindestens eine Konvertierungseinrichtung (5, 6) zur Konvertierung der Suchanfragen und Suchergebnisse in ein jeweils anderes Medium umfasst oder mit einer solchen Konvertierungseinheit (5, 6) in einer Wirkverbindung steht.

11. System nach Anspruch 10, **dadurch gekennzeichnet, dass** die Dialogeinrichtung (4) Einheiten (11, 12, 13, 15) zur Anschluss- und/oder Endgeräteerkennung, zur Texterfassung, zur Bilderfassung und zur Spracherfassung umfasst, deren Teile unmittelbarer Bestandteil der Dialogeinrichtung (4) und/oder der mit der Dialogeinrichtung (4) in Wirkverbindung stehenden Konvertierungseinheit oder Konvertierungseinheiten (5, 6) sind.

12. System nach Anspruch 11, **dadurch gekennzeichnet, dass** die Einheit oder die Einheiten (15) zur Spracherfassung jeweils mindestens eine Komponente (18) zur Sprachenerkennung, eine Komponente (16) zur Sprechererkennung, eine Komponente (17) zur Sprecherklassifizierung sowie eine Komponente (19) zur Spracherkennung und -analyse aufweisen.

13. System nach Anspruch 11 oder 12, **dadurch gekennzeichnet, dass** die Einheit oder die Einheiten (13) zur Bilderfassung jeweils mindestens eine Komponente (14) zur Erfassung von mittels einer Eingabeeinheit des Endgeräts (1) zur Generierung von Suchanfragen erstellten Zeichnungen oder Skizzen aufweisen.

14. System nach einem der Ansprüche 10 bis 13, **dadurch gekennzeichnet, dass** die Konvertierungseinheit oder die Konvertierungseinheiten (5, 6) Komponenten zur OCR-Analyse von unbewegten oder bewegten Bildern wiedergegebener Textbestandteile sowie Komponenten zur Sprachanalyse und zur Sprachsynthese umfassen.
